# EUROPEAN PATENT SPECIFICATION

(11) **EP 2 846 627 B1**
(45) Date of publication and mention of the grant of the patent: **29.08.2018**
(21) Application number: 13714353.3
(22) Date of filing: 22.02.2013
(51) Int. Cl.: A01K 1/12

(54) **A ROTARY MILKING PARLOUR AND A METHOD FOR SUCH A MILKING PARLOUR**
KARUSSELLMELKSTAND UND VERFAHREN FÜR DERARTIGEN MELKSTAND
SALLE DE TRAITE ROTATIVE ET PROCÉDÉ ASSOCIÉ

(30) Priority: 07.05.2012 SE 1250459; 07.05.2012 US 201261643413 P
(43) Date of publication of application: 18.03.2015
(73) Proprietor: DeLaval Holding AB, 147 21 Tumba (SE)
(72) Inventor: ANGLART, Dorota, 147 70 Grödinge (SE)
(74) Representative: Lilliehorn, Tobias
(86) International application number: PCT/SE2013/050155
(87) International publication number: WO 2013/169171

(56) References cited:
- WO-A1-03/024202
- WO-A1-2005/120220
- WO-A1-2010/112284
- WO-A2-2010/036102
- RU-C1- 2 029 464
- SU-A- 409 689
- SU-A- 649 373

## Description

### THE BACKGROUND OF THE INVENTION AND PRIOR ART

The present invention relates to a milking parlour and a method for such a milking parlour. The rotary milking parlour comprises an annular rotary platform, a plurality of milking stalls arranged on the platform, a first milk line system conducting milk from a first group of milking stalls on the platform, and a second milk line system conducting milk from a second group of milking stalls on the platform.

In small rotary milking parlours it is possible to use one receiver for collecting the milk from all milking stalls before the milk is pumped to a milk tank on the outside of the platform. In larger rotary milking parlours two receivers may instead be used, each collecting milk from milking stalls arranged on different halves of the platform, before the milk is pumped to a common milk tank. In a rotary milking parlour based on voluntary milking, a washing of all milk lines and components in the milk lines are usually performed with intervals of about 8 hours. Such a washing process takes about one to one and a half hours. During this period of time, the milking animals, which usually are cows, have no possibility of being milked in the rotary milking parlour.

A device for milking animals is previously known, e.g. from the international application WO2010/036102 published under the Patent Cooperation Treaty, PCT. The device in WO2010/036102 comprises a plurality of milking stations, milk lines and a milk line washing device. WO-A-2010/112284 discloses a rotary milking parlour as claimed in the first part of claim 1.

### SUMMARY OF THE INVENTION

The object of the present invention is to provide a milking parlour having a design allowing the animals to be milked at substantially all times.
This object is achieved by the rotary milking parlour initially defined, which is characterised in that the first milk line system and the second milk line system are separate milk line systems, wherein the rotary milking parlour comprises a washing device arranged to perform a washing process of one of said milk line systems at a time, and a blocking system arranged to prevent animals to enter the group of milking stalls in which the milk line system is washed and allowing animals to enter and be milked in the group of milking stalls in which the milk line system is not currently being washed.

The use of separate milk line systems for different groups of milking stalls on the platform makes it possible to wash one of said separate milk line systems at the same time as the other milk line system conducts milk from animals milked in the other group of milking stalls. Preferably, the washing device is arranged to perform a washing process of one of said milk line system at a time when the platform is rotated. The platform may be rotated such that it moves continuously or intermittently. The two groups of milking stalls may include substantially the same number of milking stalls. It is not excluded to use more than two separate milk line systems conducting milk from more than two groups of milking stalls on the platform. Preferably, the washing device is capable of supplying a washing liquid to one of said milk line systems at a time. The washing liquid may be supplied by means of wash hoses which are releasably connectable to the respective milk line systems. The blocking system only allows access to the group of milking stalls in which the milk line system is not currently being washed. In this case, the risk is eliminated that animals enter milking stalls which are not prepared for a milking process. The milking capacity of the rotary milking parlour is reduced when a washing process is taking place in one of said separate milk line systems. On the other hand, it is possible for animals to be milked at substantially all times of day and night in the rotary milking parlour. Furthermore, it is possible to perform the washing processes at periods of times where the milking activity is low.

According to an embodiment of the invention, the first group of milking stalls are arranged adjacent to each other on one half of the annular platform and the second group of milking stalls are arranged adjacent to each other on an opposite half of the annular platform. This makes it easier to position the milking animals, such as cows, in the milking stalls. A further reason to arrange the different groups of milking stalls close together on the platform, it is that the respective separate milk line system for the groups of milking stalls will be shorter and more compact.

According to an embodiment of the invention, the washing device comprises a washing unit arranged at the side of the platform, an inlet circuit supplying washing liquid from the washing unit to the milk line systems, and a valve member by which it is possible to direct the washing liquid in the inlet circuit to either the first milk line system or the second milk line system. The washing unit may be arranged at the outside or at the inside of the annular platform. Advantageously, the washing unit supplies washing liquid at a predetermined temperature to the milk line systems during a washing process. The valve member may be a three way valve settable in a closed position in which no washing liquid is supplied to the respective milk line systems, in a first open position in which it supplies washing liquid to the first milk line system and in a second open position in which it supplies washing liquid to the second milk line system.

According to an embodiment of the invention, the liquid inlet circuit comprises a wash line conducting wash liquid from the washing unit arranged at a position outside the platform to a position on the platform via a swivel connection. In this case, the washing process has to proceed while the platform rotates. It is therefore an advantage to use a swivel connection in the inlet circuit which supplies washing liquid to the respective milk line systems.

According to an embodiment of the invention, the inlet circuit for washing liquid may comprise a first wash line supplying washing liquid to washing units supporting teat cups in the first group of milking stalls during a washing process and a second wash line supplying washing liquid to washing units supporting teat cups in the second group of milking stalls during a washing process. The teat cups for each milking stall are usually placed on a washing unit of some form before a washing process starts. The washing unit may e.g. be four candle-shaped rod elements supporting the teat cups during a washing process. In this case, the inlet circuit for the washing liquid is branched into two wash lines each supplying washing liquid to one of the respective milk line systems.

According to an embodiment of the invention, the first wash line and the second wash line each have a curved shape along the inner edge portion or the outer edge portion of the platform. Preferably, the first wash line and the second wash line each have a curved shape corresponding to the curved shape of the outer edge portion or the inner edge portion of the platform. Usually, the washing units are arranged in the vicinity of a teat cup magazine for the respective milking stalls. If the cows in the milking stall have a milking position such that the teat cups are attached by a robot arm or an operator from the outside of the platform, the teat cup magazines and the washing units are usually arranged in the vicinity of the outer edge portion of the platform. If the cows in the milking stall have a milking position such that the teat cups are attached from the inside of the platform, the teat cup magazines and the washing units are usually arranged in the vicinity of the inner edge portion of the platform.

According to an embodiment of the invention, the washing device comprises a liquid outlet circuit configured to conduct the washing liquid from the milk line system back to the washing unit such that it is possible to circulate the washing liquid in a closed loop during the washing process. It is here possible to use a relatively small quantity of washing liquid of a predetermined temperature which continuously circulates through the milk line system during at least a part of a washing process.

According to an embodiment of the invention, the first milk line system and the second milk line system have an extension from the teat cups used in the respective group of milking stalls to a milk line conducting milk to a common milk tank for the two milk systems. Such a milk line may comprise a valve member which directs the milk in the milk line to the milk tank when milking processes are taking place in the milk system, and which directs the washing liquid in the milk line to a washing unit during a washing process of the milk system.

According to an embodiment of the invention, at least one of the first milk line system and the second milk line system comprises a common milk line collecting milk from individual milk lines for all milking stalls in the group.

Preferably, the individual milk lines for each milking stall have a relatively short length in order to reduce the total length of the milk line systems. Said common milk line may have a curved extension along an inner edge portion of the platform. In this case, the milk from each milking stall is conducted, via the teat cups and connected individual milk lines, to different positions of the common milk line at the inner edge portion of the platform.

According to an embodiment of the invention, the blocking system comprises a blocking member arranged in a passage leading to at least one milking stall on the platform, wherein the blocking member is movably arranged between an open position, in which it allows an animal to enter the milking stall, and a closed position, in which it prevents an animal from entering the milking stall. Such a blocking member may be a movable gate, bar or any other kind of movable element.

The movable blocking member may be positioned outside the platform in a passage leading to at least one milking stall on the platform. Conventional rotary milking parlours may comprise an entrance passage to the milking stalls on the rotary platform with a movable gate which is open when a vacant milking stall on the platform arrives at a rotational position just in front of the entrance passage and the gate. Such an already existing gate may be used to block the milking stalls in one of the groups when a washing process proceeds. In this case, the gate will not open when the blocked milking stall arrives at the rotational position just in front of the gate.

Alternatively, said blocking member is positioned on the platform in a passage leading to at least one milking stall. It is also in this case possible to use already existing components on the platform to block a milking stall. Such components may be movable fence arrangement dividing the platform into milking positions or retention bars which in a closed position prevents an animal from leaving a milking stall on the platform. With a suitable design of such components, they may be controlled in a manner such that they also prevent an animal from entering a blocked milking stall.

According to a preferred embodiment of the invention, the blocking system comprises a control unit adapted to control the motion of the blocking member. Such a control unit may be a computer or the like provided with software adapted to control the motion of the blocking member. Alternatively, an operator moves the blocking members to the closed position before a washing process is to start.

According to an embodiment of the invention, the rotary milking parlour is based on voluntary milking. The rotary milking parlour is especially suitable to use when the animals on a voluntary basis is moved to the rotary milking parlour to be milked. Since the rotary milking parlour is not shut off for washing, it is always possible for an animal to be milked in the rotary milking parlour.

According to a preferred embodiment of the invention, the rotary milking parlour comprises a waiting area. Such a waiting area is possible to use in rotary milking parlours based on voluntary animal traffic or in parlours where batch milking is practised where an operator brings the animals to the waiting area. All animals which have milking permission have access to the waiting area. Since the rotary milking parlour is not shut off for washing processes, the animals have access to the waiting area during all times.

The initial object is also achieved by the method defined in claim 17.

### BRIEF DESCRIPTION OF THE DRAWINGS

The present invention is now to be explained more closely by means of preferred embodiments, which are disclosed as examples, and with reference to the attached drawings.
- Fig 1: shows a rotary milking parlour according to a first embodiment of the invention,
- Fig 2: shows one of the milking stalls in Fig. 1 from a position inside of the platform,
- Fig 3: shows a rotary milking parlour according to a second embodiment of the invention and
- Fig 4: shows one of the milking stalls in Fig. 3 from a position inside of the platform.

### BRIEF DESCRIPTION OF PREFERRED EMBODIMENTS OF THE INVENTION

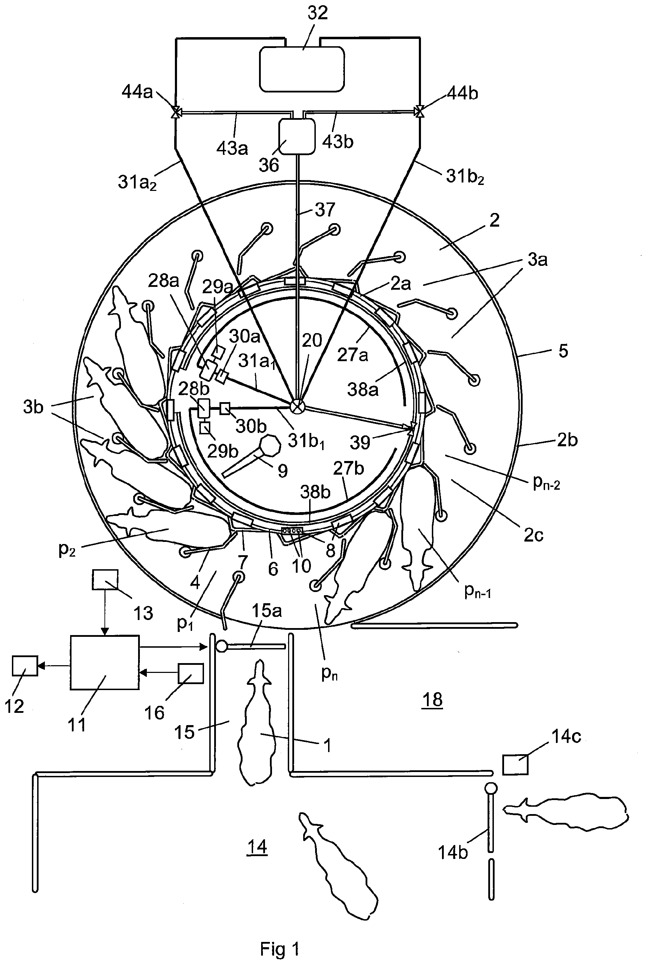

Fig 1 shows a rotary milking parlour for milking of cows 1. The milking parlour comprises an annular platform 2 having an inner edge portion 2a and an outer edge portion 2b. The platform 2 rotates during operation around a vertical axis. The platform 2 has an upper surface 2c forming a support surface for the cows 1. A plurality of rotatable fence members 4 are arranged on the upper surface 2c of the platform 2. The rotatable fence members 4 are used for dividing the platform 2 into milking stalls 3a, 3b for receiving individual cows 1 in predetermined milking positions. A first group of milking stalls 3a are arranged on a one half of the platform 2 and a second group of milking stalls 3b are arranged on an opposite half of the platform 2. By the use of rotatable fence members 4, it is possible to position the cows 1 very close together on the platform 2. An outer fence arrangement 5 is mounted around a common part of the outer periphery of the platform 2. An inner fence arrangement 6 and a rumprail 7 are arranged at the inner edge portion 2a of the platform 2. The object of the rumprail 7 is to position the rear part of the cows 1 in a predetermined milking position in the milking stalls 3. In this milking parlour, the cows 1 are arranged in a herringbone pattern with their heads at the outer edge portion 2b of the platform 2.

A milking robot arm 9 is arranged in a position inside the inner edge portion 2a of the platform 2. Each milking stall 3 comprises a teat cup magazine 8 adapted to hold four teat cups 10 in a parked position when they are not used. Teat cup magazines 8 are arranged at the inner edge 2a of the platform 2. In this case, the teat cup magazines 8 are arranged on one side of a cow 1 in a milking stall 3 and behind a cow 1 standing in an adjacent milking stall 3. When the cows 1 are arranged in a herringbone pattern on a platform 2, the above-mentioned space is normally empty. Therefore, it is very suitable to use this space for the teat cup magazines 8. A control unit 11 is adapted to control a schematically shown drive mechanism 12 for driving of the platform 2. A position sensor 13 is adapted to sense the rotational position of the platform 2 and to send a signal to the control unit 11 about the actual position of the platform 2.

The rotary milking parlour comprises a waiting area 14 in the vicinity of the platform 2. The waiting area 14 has an entrance gate 14b provided with a first identification sensor 14c, and an entrance passage 15 to the platform 2. An entrance gate 15a is arranged in a front position of the entrance passage 15. A second identification sensor 16 identifies the cows 1 in a first position of the entrance passage 15. The rotary milking parlour comprises an exit area 18 in connection to the platform 2. The cows 1 enter the exit area 18 when they leave the platform 2.

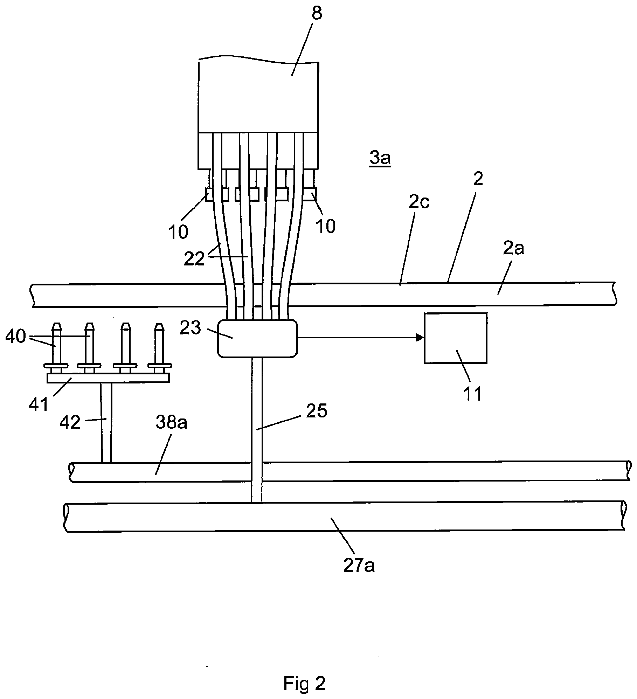

Fig. 2 shows one of the milking stalls 3a in the first group from the inside of the annular platform 2. In this case, there is no cow 1 in the milking stall 3a and the teat cups 10 are in a parked position in the teat cup magazine 8. During a milking process in the milking stall 3a, the four teat cups 10 are attached to a respective teat of a cow 1 in the milking stall 3a. The milk from the respective teats of the cow 1 flows from the teat cups 10, via a respective milk tube 22, to a milk meter 23. The milk meter 23 measures the milk flow in the respective milk tubes 22. The control unit 11 receives information about the milk flow from the milk meter 23. A milk conduit 25 leads the milk from the milk meter 23 to a common milk line 27a for all milking stalls 3a in the first group. The common milk line 27a has a curved shape along the inner edge 2a of the platform 2. The curved milk line 27a is arranged below the floor surface 2c in the milking stall 3a. The curved milk line 27a is at an end portion connected to a common receiver 28a for milk from the first group of milking stalls 3a. A schematically disclosed vacuum source 29a is connected to the common receiver 28a. The vacuum source 29a sucks milk through the curved milk line 27a to the common receiver 28a.

A pump 30a is arranged in connection with the common receiver 28a. The object of the pump 30a is to pump the milk from the common receiver 28a to a common milk tank 32 arranged at the outside of the platform 2. The milk is pumped from the common receiver 28a, via a first part of a milk line 31a₁, to a swivel connection 20. The milk is conducted from the swivel connection 20 to the milk tank 32 via a second part of the milk line 31a₂ and a valve member 44a. The milk from the cows 1 in the first group of milking stalls 3a is conducted to the milk tank 32 via a first milk line system. The first milk line system comprises individual milk passages for the first milking stalls 3a in the form of the teat cups 10, the milk tubes 22, the milk meter 23 and the milk conduit 25. The first milk line system comprises common milk passages for the first milking stalls 3a in the form of the curved milk line 27a, the first part of the milk line 31a₁, the swivel connection 20 and the second part of the milk line 31a₂.

The milk from the milking stalls 3b in the second group flows in a corresponding manner from teat cups 10, via a respective milk tube 22, to a milk meter 23. A milk conduit 25 leads the milk from the milk meter 23 to a common curved milk line 27b for all milking stalls 3b in the second group. The curved milk line 27b has an extension along the inner edge 2a of the platform 2 below the milking stalls 3b in the second group. The curved milk line 27b is at an end portion connected to a common receiver 28b for milk from the second group of milking stalls 3b. A schematically disclosed vacuum source 29b is connected to the common receiver 28b. The vacuum source 29b sucks milk through the curved milk line 27b to the common receiver 28b.

A pump 30b is arranged in connection to the common receiver 28b. The object of the pump 30b is to pump the milk from the common receiver 28b to the common milk tank 32 arranged at the outside of the platform 2. The milk is pumped from the common receiver 28b, via a first part of a milk line 31b₁, to a swivel connection 20. The milk is conducted from the swivel connection 20 to the milk tank 32 via a second part of the milk line 31b₂ and a valve member 44b. The milk from the cows 1 in the second group of milking stalls 3a is conducted to the milk tank 32 via a second milk line system. The second milk line system comprises milk passages for the individual second milking stalls 3b in the form of the teat cups 10, the milk tubes 22, the milk meters 23 and the milk conduits 25. The second milk line system comprises common milk passages for the milk from the milking stalls 3b in the second group in the form of the curved milk line 27b, the first part of the milk line 31b₁, the swivel connection 20 and the second part of the milk line 31b₂.

The rotary milking parlour comprises a washing device. The washing device comprises a washing unit 36 arranged in a position at the outside of the platform 2. The washing device comprises an inlet line 37 for washing liquid having an extension from the washing unit 36, via the swivel connection 20, to a valve member 39. The valve member 39 is settable in a closed position and in two open positions. In a first open position, the valve member 39 directs washing liquid from the inlet line 37 to a first curved wash line 38a arranged at the inner periphery of the platform 2. The first curved wash line 38a is arranged below the first group of milking stalls 3a. In a second open position, the valve member 39 directs washing liquid from the inlet line 37 to a second curved wash line 38b arranged at the inner periphery of the platform 2. The second curved wash line 38b is arranged below the second group of milking stalls 3b. A washing unit 40 in the form of four vertical rod elements is arranged in the vicinity of each milking stall 3a, 3b. The teat cups 10 are placed on a respective rod element of the washing unit 40 during a washing process. Each rod element of the washing unit 40 is, via a horizontal conduit 41 and a vertical conduit 42 connected to one of the curved wash lines 38a, 38b.

A cow 1 wanting to be milked walks to the entrance gate 14b of a waiting area 14. The cow 1 carries a transponder containing data about the individual cow 1. The first identification sensor 14c reads the transponder and sends a signal to the control unit 11 about the identity of the cow 1. The control unit 11 concludes if the cow 1 has been granted a milking permission or not. If the cow 1 has been allowed a milking permission, the entrance gate 14b is opened and the cow 1 enters the waiting area 14. If the cow 1 has not been granted a milking permission, the entrance gate 14b is not opened and the cow 1 is not allowed to enter the waiting area 14.

In the waiting area 14, the cow 1 is allowed to enter the entrance passage 15 leading to the rotary platform 2. The entrance passage 15 has a width such that only one cow 1 at a time can be located in a front position of the passage 15. The second identification sensor 16 identifies the cow 1 when it arrives at the front position of the passage 15 and sends a signal to the control unit 11 about the identity of the cow 1. The control unit 11 continuously receives information from the position sensor 13 about the actual rotational position of the platform 2. When a vacant milking stall 3a, 3b arrives at a first rotational position p₁, just in front of the entrance gate 15a, the control unit 11 opens the entrance gate 15a and the cow 1 enters the platform 2. The entrance gate 15a is moved to a closed position as soon as the whole cow 1 has entered the platform 2. The cow 1 walks around the pivot of the fence member 4 and enters a milking stall 3a, 3b on the platform. The fence member 4 is moved to a position in contact with the cow 1 by means of a not shown control member.

The control unit 11 activates the robot arm 9 such that it fetches the teat cups 10 from the teat cup magazine 8 and attaches them to the cow 1 when the milking stall 3a, 3b has reached a second rotational position p₂. The platform 2 is driven with a speed such that it is no problem for the robot arm 9 to compensate for the relative motions between the cow 1 on the platform 2 and the robot arm 9 during the attaching process of teat cups 7 to the cow 1. The milking process starts when all teat cups 10 have been attached to the cow 1. If the cow 1 is milked in a milking stall 3a in the first group, the milk is conducted from the cow 1, via the above mentioned first milk line system, to the milk tank 32. If the cow 1 is milked in a milking stall 3b in the second group, the milk is conducted from the cow 1, via the above mentioned second milk line system, to the milk tank 32.

The milk meter 23 supervises the milk flow during the milking process. The control unit 11 receives information about the milk flow from the milk meter 23. As soon as the milk flow drops below a predetermined value, a removing device, which is arranged in the teat cup magazine 8, removes the teat cups 10 from the teats of the cow 1 (removal may also take place on a teat individual level). The teat cups 10 are at least removed when the milking stall 3a, 3b arrives at a third to last rotational position pₙ₋₂. In the second to last rotational position pₙ₋₁, a treatment supplying device may spray a disinfecting medium or another kind of treatment medium to the teats of the cow 1. Finally, when the milking stall 3a, 3b reaches a last rotational position pₙ, the cow 1 leaves the milking stall 3a, 3b and enters the exit area 18. Thereafter, the milking stall 3a, 3b will again be rotated to the first rotational position p₁ and be ready to receive a new cow 1.

Consequently, the rotary milking parlour comprises a first milk line system conducting milk from the cows 1 in the first group of milking stalls 3a to the milk tank 32, and a second milk line system conducting milk from the cows 1 in the second group of milking stalls 3b to the milk tank 32. A complete washing process of the respective milk line systems may be performed with intervals of about 8 hours. Since the two milk line systems are separate, it is possible to perform a washing process and to circulate washing liquid in one of the milk line systems at the same time as milking processes is performed and milk is conducted in the other milk line system. Thereby, the rotary milking parlour will not to be set in a shut off mode when a washing process is performed. The milking stalls 3a, 3b in at least one of the groups are always accessible for a cow 1 desiring to be milked.

Fig. 1 shows the rotary milking parlour during a washing process of the first milk line system. Thus, the milking stalls 3a in the first group are vacant. Before the washing process of the first milk system is started, the valve member 44a is set in a washing position in which it directs the washing liquid to the wash unit 36. The teat cups 10 in all milking stalls 3a in the first group are placed on the respective washing units 40. The valve member 39 is set in the first open position such that it directs the washing liquid in inlet line 37 to the first curved wash line 38a.

The washing unit 36 starts and it supplies washing liquid with a predetermined temperature to the wash line 37 and to the second curved wash line 38b via the valve member 39. The washing liquid flows from the second curved wash line 38a up into the respective vertical tubes 42 and the horizontal tubes 41 to the washing units 40 for the milking stall 3a in the first group. The washing liquid flows into the teat cups 10 and through the milk tubes 22, the milk meters 23, the milk conduit 25 and to the first curved milk line 27a. The washing liquid is sucked through the first curved milk 27a to the common receiver 28a by means of the vacuum source 29a. The washing liquid is pumped from the common receiver 28a, via the first part of the milk line 31a₁, the swivel connection 20 and the second part of the milk line 31a₂ and the valve member 44a. The washing liquid flows back to the washing unit 36 via a wash line 43a and the valve member 44a. The washing liquid may be heated to the predetermined temperature in the washing unit 36 before it again circulates through first milk line system.

The rotary milking parlour comprises a blocking system configured to block the milking stalls 3a in the first group of milking stalls during the washing process, such that the animals have no access to the milking stalls 3a in the first group of milking stalls. In this case, the blocking system comprises the control unit 11 and the entrance gate 15a. When a washing process has started of the first milk line system, the control unit 11 does not open the entrance gate 15a when a milking stall 3a in the first group arrives at the first rotational position p₁. Thus, a cow 1 in a front position of the entrance passage 15 has to wait until a milking stall 3b in the second group arrives at the first rotational position before the entrance gate 15a is opened by the control unit 11. The washing process of the first milk line system takes one to one and a half hours. When the washing process is finished, the valve members 39 are set in a closed position and the teat cups 10 are moved from the washing units 40 to a parked position in the teat cup magazines 8. The valve member 44a is set in a milking position in which it directs the milk in the milk line 31a₂ to the milk tank 32. It is now again possible to use the milking stall 3a in the first group, and the control unit 11 opens the entrance gate 15a as soon as a milking stall 3b in the second group arrives at a first rotational position p₁. The second milk line system conducting milk from animals in the second group of milking stalls 3b to the milk tank 32 is washed in a corresponding manner.

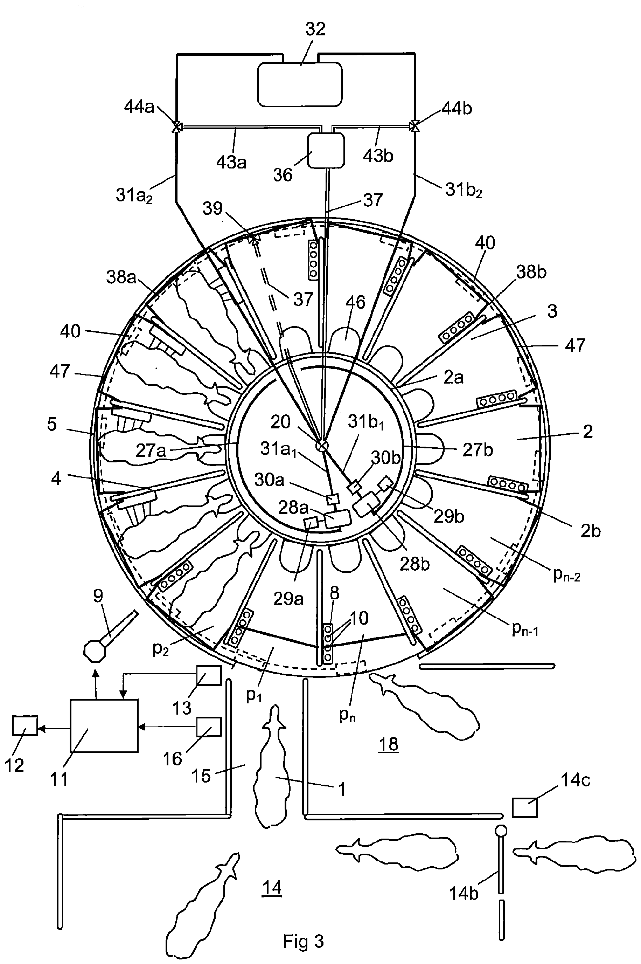

Fig. 3 shows a milking parlour in the form of a parallel rotary. Voluntary milking is practised. The rotary milking parlour comprises an annular platform 2 having an inner edge portion 2a and an outer edge portion 2b. A plurality of stationary fence members 4 are arranged on the upper surface of the platform 2. The fence members 4 form milking stalls 3a, 3b for receiving individual cows 1. A first group of milking stalls 3a are arranged on a first half of the platform 2 and a second group of milking stalls 3b are arranged on a second half of the platform 2. In this case, the fence members 4 have an essentially straight radial extension on the platform 2 between an inner end located in the vicinity of the inner edge portion 2a of the platform and an outer end located in the vicinity of the outer edge portion 2b of the platform. The fence members 4 are arranged at equal intervals around the annular platform 2. An outer fence arrangement 5 is mounted around a main part of the outer periphery of the platform 2, and an inner fence arrangement 6 is mounted around the outer periphery of the platform 2. Each milking stall 3 is provided with a feeding trough 46 arranged in the vicinity of the inner periphery 2a of the platform. Each milking stall 3 is equipped with a teat cup magazine 8 with four teat cups 10 in the vicinity of the outer periphery of the platform 2. A robot arm 9 is here arranged in a position at the outside of the platform 2.

A control unit 11 is adapted to control a schematically shown drive mechanism 12 for driving of the platform 2. A position sensor 13 is adapted to sense the rotational position of the platform 2 and to send a signal to the control unit 11 about the actual position of the platform 2. The rotary milking parlour comprises a corresponding waiting area 14 and exit area 18 as the rotary milking parlour shown in Fig. 1. Each milking stall 3a, 3b is equipped with a retention bar 47. The object of the retention bar 47 is to prevent a cow 1 from leaving a milking stall 3a, 3b after one revolution on the platform 2. This may be the case if, for example, the milking process has not been finished in time. The retention bar 47 is pivotally connected to the fence members 4 on opposite sides of the milking stall 3a, 3b. A not shown operating cylinder turns the retention bar 47 between a closed position and an open position. The retention bar 47 is lowered behind a cow in the milking stall in the closed position such that the retention bar 47 prevents the cow 1 from leaving the milking stall 3a, 3b. The retention bar 47 is raised to a level above the cow 1 in the open position such that a cow 1 is free to leave the milking stall 3a, 3b.

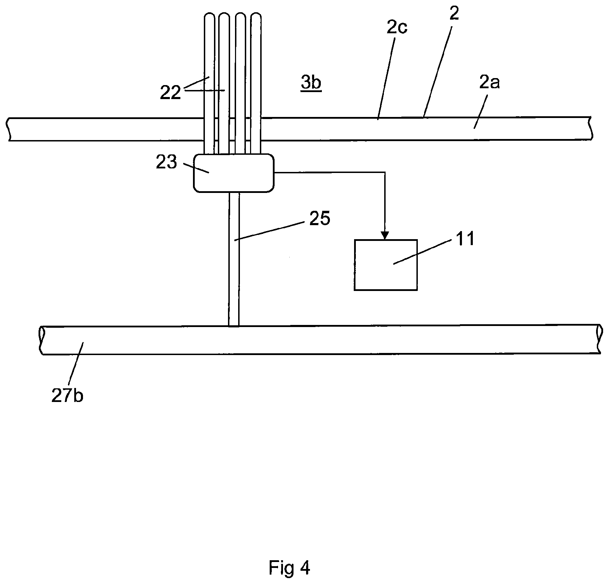

Fig. 4 shows a milking stall 3b from the second group from the inside of the platform 2. The teat cups 10 are attached to a respective milk tube 22. The milk tubes 22 has an extension from the teat cup magazine 10 at the outer periphery of the platform 2 to a milk meter 23 arranged at the inner periphery of the platform 2. The control unit 11 receives information about the milk flow from the milk meter 23. The milk flows from the milk meter 23, via a milk conduit 25, to a common curved milk line 27b for all milking stalls 3b in the second group. The curved milk line 27b is arranged at the inner edge portion 2a of the platform 2.

The curved milk line 27b is connected to a common receiver 28b. A vacuum source 29b is connected to the common receiver 28b. The vacuum source 29b sucks milk through the first curved milk line 27b to the common receiver 28b. A pump 30b is arranged in connection to the common receiver 28b. The pump 30b pumps milk from the common receiver 28b, via a first part of a milk line 31b₁, a swivel connection 20 and a second part of the milk line 31b₂, to a common milk tank 32 arranged at the outside of the platform 2. The milk from cows 1 in the milking stalls 3b in the second group is conducted to the common milk tank 32 via a second milk line system.

The milk from the milking stalls 3a in the first group flows in a corresponding manner to a first part of a common curved milk line 27a at the inner edge portion 2a of the platform 2. The first curved milk line 27a is connected to a common receiver 28a for milk from the milking stalls 3a in the first group. A schematically disclosed vacuum source 29a is connected to the common receiver 28a. The vacuum source 29a sucks milk through the first part of the curved milk line 27a to the common receiver 28a. A pump 30a is arranged in connection to the common receiver 28a. The pump 30a pumps the milk from the common receiver 28a, via a first part of a milk line 31a₁, a swivel connection 20 and a second part of the milk line 31a₂, to the milk tank 32 arranged at the outside of the platform 2. The milk from cows in the milking stalls 3a in the first group of is conducted to the milk tank 32 via a first milk line system.

The rotary milking parlour comprises a washing device. The washing device comprises a washing unit 36 arranged on an outside position of the platform 2. The washing device comprises an inlet line 37 for washing liquid having an extension from the washing unit 36, via the swivel connection 20, to a valve member in the form of a three way valve 39 arranged at a position at the outside of the platform 2. The valve member 39 is settable in a closed position and in two open positions. In a first open position, the valve member 39 directs washing liquid from the wash line 37 to a first curved wash line 38a arranged at the outer edge portion 2b of the platform 2. In a second open position, the valve member 39 directs washing liquid from the wash line 37 to a second curved wash line 38b at the outer edge portion 2b of the platform 2. A washing unit 40 is arranged in the vicinity of each milking stall 3a, 3b at the outer edge portion of the platform 2. The teat cups 10 are placed on a respective washing unit 40 during a washing process of the milking parlour. Each washing unit 40 is, via a not disclosed wash conduit, connected to one of the curved wash lines 38a, 38b. The washing unit and the wash conduit may have a corresponding design as the washing unit 40 and the wash line 41, 42 shown in Fig. 2.

A cow 1 desiring to be milked walks to the entrance gate 14b of a waiting area 14. The cow 1 carries a transponder containing data about the individual cow 1. The first identification sensor 14c reads the transponder and sends a signal to the control unit 11 about the identity of the cow 1. The control unit 11 concludes if the cow 1 has been granted a milking permission or not. If the cow 1 has been allowed a milking permission, the entrance gate 14b is opened and the cow 1 enters the waiting area 14. If the cow 1 has not been granted a milking permission, the entrance gate 14b is not opened and the cow 1 is not allowed to enter the waiting area 14.

In the waiting area 14, the cow 1 may enter the entrance passage 15 leading to the rotary platform 2. The entrance passage 15 has a width such that only one cow 1 at a time can be located in a front position of the passage 15. The second identification sensor 16 identifies the cow 1 when it arrives at the front position of the passage 15 and sends a signal to the control unit 11 about the identity of the cow 1. The control unit 11 continuously receives information from the position sensor 13 about the actual rotational position of the platform 2. When a vacant milking stall 3a, 3b with a retention bar 47 in an open position arrives at a first rotational position p₁, the cow 1 enters the platform 2. The retention bar 47 is moved to a closed position as soon as the cow 1 has entered the milking stall 3a, 3b.

The control unit 11 activates the robot arm 9 such that it fetches the teat cups 10 from the teat cup magazine 8 and attaches them to the cow 1 when the milking stall 3a, 3b has reached a second rotational position p₂. The milking process starts when the teat cups 10 have been attached to the cow 1. The milk meter 23 supervises the milk flow during the milking process. The control unit 11 receives information about the milk flow from the milk meter 23. As soon as the milk flow drops below a predetermined value, a removing device, which is arranged in the teat cup magazine 8, removes the teat cups 10 from the teats of the cow 1.

The milking process is usually finished when the milking stall 3a, 3b arrives at a third to last rotational position pₙ₋₂. The teat cups 10 are removed. In the second to last rotational position pₙ₋₁, a treatment supplying device may spray a disinfecting medium or another kind of treatment medium to the teats of the cow 1. Finally, when the milking stall 3a, 3b reaches a last rotational position pₙ, the cow 1 leaves the milking stall 3a, 3b and enters the exit area 18. Thereafter, the milking stall 3a, 3b will again be rotated to the first rotational position p₁ and be ready to receive a new cow 1. If the milking process is not finished when the milking stall 3a, 3b arrives at a third to last rotational position pₙ₋₂, the teat cups are not removed and the milking process is continued. In this case, the control unit 11 maintains the retention bar 47 in the closed position such that the cow 1 cannot leave the milking stall 3 when it arrives at the first rotational position p₁.

Thus, the rotary milking parlour comprises a first milk line system conducting milk from the cows 1 in the milking stalls 3a in the first group to the milk tank 32, and a second milk line system conducting milk from the cows in the milking stalls 3b in the second group to the milk tank 32. A washing process of the respective first milk line system and the second milk line system is performed at different occasions. Each milk line system may be washed with intervals of about 8 hours. Since it is possible to wash the milk line systems at different occasions, the rotary milking parlour will not be completely shut off during a washing process. The milking stalls 3a, 3b in at least one of the groups are always accessible for a cow 1 desiring to be milked.

Fig. 3 shows the rotary milking parlour during a washing process of the second milk line system. Thus, all milking stalls 3b in the second group are vacant. Before the washing process is started, the valve member 44b is set in a washing position. The teat cups 10 in all milking stalls 3b in the second group are placed on the washing units 40 at the outer edge portion 2b of the platform 2. The valve member 39 is set in the second open position such that it guides washing liquid from the inlet line 37 to the second curved wash line 38b.

During the washing process of the second milk line system, the washing unit 36 supplies washing liquid with a predetermined temperature through the inlet line 37 to the second curved wash line 38b via the valve member 39. The washing liquid flows from the curved wash line 38b to the washing units 40 in the milking stalls 3b in the second group. The washing liquid flows into the teat cups 10 and through the milk tubes 22 for all milking stalls 3b in the second group. In this case, the milk tubes 10 have an extension from the washing unit 40 at an outer edge portion of the platform 2 to a milk meter 23 at an inner edge portion 2a of the platform 2. The washing liquid flows from the milk meters 23, via milk conduits 25, to the first part of the curved milk line 27b receiving milk from all milking stalls 3b in the second group. The washing liquid is sucked through the first part of the common milk 27a to the common receiver 28b by means of the vacuum source 29b. The washing liquid is then pumped from the common receiver 28b, via the first part of the milk line 31bi, the swivel connection 20 the second part of the milk line 31b₂ and the valve member 44b back to the washing unit 36 via a wash line 43b. The washing liquid may be heated to the predetermined temperature in the washing unit 36 before it again circulates through second milk line system.

The rotary milking parlour comprises a blocking system configured to block the milking stalls 3b in the second group of milking stalls during the period of time the washing process proceeds such that the animals have no access to these milking stalls 3b. In this case, the blocking system comprises the control unit 11 and the retention bar 47. When a washing process of the milking stalls 3b in the second group has started, the control unit 11 sets the retention bars 47 in the milking stalls 3b in the second group in a closed position. The closed retention bar 47 prevents a cow 1 in a first position of the entrance passage 15 from entering a milking stall 3b in the second group when it arrives at the first rotational position p₁. The cow 1 in the entrance passage 15 has to wait until a milking stall 3a in the first group arrives at the first rotational position before entering the platform 2.

The washing process of the second milk line system takes at least one hour. When the washing process is finished, the valve members 39 are set in a closed position and the teat cups 10 are moved from the washing units 40 to a parked position in the teat cup magazines 8. The valve member 44b is set in a milking position. The control unit 11 sets the retention bars 47 in the milking stall 3b in the second group in an open position. It is now again possible to perform milking processes in the milking stall 3b in the second group. The first milk line system conducting milk from cows 1 in the milking stalls 3a in the first group to the milk tank 32 will be washed in a corresponding manner at a later time.

The invention is not restricted to the described embodiment but may be varied freely within the scope of the claims. In the described embodiments, washing liquid can only be directed to one of the wash lines at a time, but it is also possible to have an option to direct washing liquid to the whole system at the same time when so desired. The first and second groups of milking stalls need not be arranged on a first and second half of the platform, but could instead be formed by for example every other milking stall. The rotary milking parlour may be equipped with a receiver for each milking stall instead of with a receiver for each group of milking stalls. There are not necessarily any feed troughs or fencing arrangements on the platform.

## Claims

1. A rotary milking parlour, wherein the rotary milking parlour comprises a annular rotary platform (2), a plurality of milking stalls (3a, 3b) arranged on the platform (2), and a washing device and a blocking system (11, 15a, 47); the rotary milking parlour being **characterised in that** it comprises a first milk line system conducting milk from a first group of milking stalls (3a) on the platform and a second milk line system conducting milk from a second group of milking stalls (3b) on the platform (2), the first milk line system and the second milk line system being separate milk line systems; and that the washing device is arranged to perform a washing process of one of said milk line systems at a time; and that the blocking system (11, 15a, 47) is arranged to prevent animals from entering the group of milking stalls (3a, 3b) in which the milk line system is currently being washed and allow animals to enter and be milked in the group of milking stalls (3a, 3b) in which the milk line system is not currently being washed.

2. A rotary milking parlour according to claim 1, **characterised in that** the first group of milking stalls (3a) are arranged adjacent to each other on one half of the annular platform (2) and the second groups of milking stalls (3b) are arranged adjacent to each other on an opposite half of the annular platform (2).

3. A rotary milking parlour according to claim 1 or 2, **characterised in that** the washing device comprises a washing unit (36) arranged at the side of the platform (2), an inlet circuit (37, 38a, 38b, 40) supplying washing liquid from the washing unit (36) to the milk line systems, and a valve member (39) by which it is possible to direct the washing liquid in the inlet circuit to the first milk line system or the second milk line system.

4. A rotary milking parlour according to claim 3, **characterised in that** the liquid inlet circuit comprises a wash line (37) conducting wash liquid from the washing unit (36) arranged at a position outside the platform to a position on the platform (2) via a swivel connection (20).

5. A rotary milking parlour according to claim 3 or 4, **characterised in that** the inlet circuit for washing liquid comprises a first wash line (38a) supplying washing liquid to washing units (40) supporting teat cups (10) in the first group of milking stalls (3a) during a washing process and a second wash line (38b) supplying washing liquid to washing units (40) supporting teat cups (10) in the second group of milking stalls (3b) during a washing process.

6. A rotary milking parlour according to any one of the preceding claims, **characterised in that** the washing device comprises a liquid outlet circuit (43a, 43b) configured to conduct the washing liquid from the milk line system back to the washing unit (36) such that it is possible to circulate the washing liquid in a closed loop during the washing process.

7. A rotary milking parlour according to any one of the preceding claims, **characterised in that** the first milk line system and the second milk line system have an extension from the teat cups (10) used in the respective group of milking stalls (3a, 3b) to a milk line (31a₂, 31b₂) conducting milk to a common milk tank (32) for the two milk systems.

8. A rotary milking parlour according to any one of the preceding claims, **characterised in that** at least one of the first milk line system and the second milk line system comprises a common milk line (27a, 27b) collecting milk from individual milk lines (25) from all milking stalls (3a, 3b) in the group.

9. A rotary milking parlour according to any one of the preceding claims, **characterised in that** the blocking system comprises a blocking member (15a, 47) arranged in a passage (15) leading to at least one milking stall (3a, 3b) on the platform, wherein the blocking member (15a) is movably arranged between an open position, in which it allows an animal (1) to enter the milking stall (3a, 3b), and a closed position, in which it prevents an animal (1) from entering the milking stall (3a, 3b).

10. A rotary milking parlour according to claim 9, **characterised in that** the blocking member (15a) is positioned outside the platform (2) in a passage (15) leading to at least one milking stall (3a, 3b) on the platform (2).

11. A rotary milking parlour according to claim 9, **characterised in that** the blocking member (47) is positioned on the platform (2) in a passage (3a) leading to at least one milking stall (3a, 3b).

12. A rotary milking parlour according to any one of the preceding claims 9 to 11, **characterised in that** the blocking system comprises a control unit controlling the motion of the blocking member (15a, 47) to the open position and the closed position.

13. A rotary milking parlour according to any one of the preceding claims, **characterised in that** the rotary milking parlour is based on voluntary milking.

14. A rotary milking parlour according to any one of the preceding claims, **characterised in that** the rotary milking parlour comprises a waiting area (14) in which the animals wait before they enter the platform (2).

15. A method for a rotary milking parlour, wherein the rotary milking parlour comprises a annular rotary platform (2), a plurality of milking stalls (3a, 3b) arranged on the platform (2), a first milk line system conducting milk from a first group of milking stalls (3a) on the platform and a second milk line system conducting milk from a second group of milking stalls (3b) on the platform (2), and wherein the first milk line system and the second milk line system are separate milk line systems, **characterised by** the steps of performing a washing process of the first milk line system or the second milk line system at the same time as milking processes proceed in the milking stalls (3a, 3b) of the other milk line system, preventing animals to enter the group of milking stalls (3a, 3b) in which the milk line system is currently being washed and allowing animals to enter and be milked in the group of milking stalls (3a, 3b) in which the milk line system is not currently being washed.

## Patentansprüche

1. Karussellmelkstand, wobei der Karussellmelkstand eine ringförmige Drehplattform (2), mehrere auf der Plattform (2) angeordnete Melkplätze (3a, 3b) und eine Wascheinrichtung und ein Blockiersystem (11, 15a, 47) umfasst;
wobei der Karussellmelkstand **dadurch gekennzeichnet ist, dass** er ein erstes Milchleitungssystem, das Milch von einer ersten Gruppe von Melkplätzen (3a) auf der Plattform führt, und ein zweites Milchleitungssystem, das Milch von einer zweiten Gruppe von Melkplätzen (3b) auf der Plattform (2) führt, umfasst, wobei das erste Milchleitungssystem und das zweite Milchleitungssystem getrennte Milchleitungssysteme sind; und **dadurch gekennzeichnet, dass** die Wascheinrichtung angeordnet ist, einen Waschvorgang jeweils eines der Milchleitungssysteme durchzuführen; und dass das Blockiersystem (11, 15a, 47) angeordnet ist, zu verhindern, dass Tiere die Gruppe von Melkplätzen (3a, 3b) betreten, in denen das Milchleitungssystem gegenwärtig gewaschen wird, und es Tieren ermöglicht, die Gruppe von Melkplätzen (3a, 3b) zu betreten und in dieser gemelkt zu werden, in der das Milchleitungssystem gegenwärtig nicht gewaschen wird.

2. Karussellmelkstand nach Anspruch 1, **dadurch gekennzeichnet, dass** die erste Gruppe von Melkplätzen (3a) nebeneinander auf einer Hälfte der ringförmigen Plattform (2) angeordnet sind und die zweiten Gruppen von Melkplätzen (3b) nebeneinander auf einer gegenüberliegenden Hälfte der ringförmigen Plattform (2) angeordnet sind.

3. Karussellmelkstand nach Anspruch 1 oder 2, **dadurch gekennzeichnet, dass** die Wascheinrichtung Folgendes umfasst: eine Wascheinheit (36), die auf der Seite der Plattform (2) angeordnet ist, einen Einlasskreislauf (37, 38a, 38b, 40), der eine Waschflüssigkeit von der Wascheinheit (36) zu den Milchleitungssystemen zuführt, und ein Ventilelement (39), mit dem es möglich ist, die Waschflüssigkeit im Einlasskreislauf zum ersten Milchleitungssystem oder zum zweiten Milchleitungssystem zu leiten.

4. Karussellmelkstand nach Anspruch 3, **dadurch gekennzeichnet, dass** der Flüssigkeitseinlasskreislauf eine Waschleitung (37) umfasst, die eine Waschflüssigkeit von der Wascheinheit (36), die an einer Position außerhalb der Plattform angeordnet ist, über einen Schwenkanschluss (20) zu einer Position auf der Plattform (2) führt.

5. Karussellmelkstand nach Anspruch 3 oder 4, **dadurch gekennzeichnet, dass** der Einlasskreislauf für Waschflüssigkeit Folgendes umfasst: eine erste Waschleitung (38a), die Waschflüssigkeit zu den Wascheinheiten (40) zuführt, die während eines Waschvorgangs Zitzenbecher (10) in der ersten Gruppe von Melkplätzen (3a) tragen, und eine zweite Waschleitung (38b), die Waschflüssigkeit zu Wascheinheiten (40) zuführt, die während eines Waschvorgangs Zitzenbecher (10) in der zweiten Gruppe von Melkplätzen (3b) tragen.

6. Karussellmelkstand nach einem der vorhergehenden Ansprüche, **dadurch gekennzeichnet, dass** die Wascheinrichtung einen Flüssigkeitsauslasskreislauf (43a, 43b) umfasst, der konfiguriert ist, die Waschflüssigkeit von dem Milchleitungssystem zurück zur Wascheinheit (36) zu führen, sodass es möglich ist, die Waschflüssigkeit in einem geschlossenen Kreislauf während des Waschvorgangs umzuwälzen.

7. Karussellmelkstand nach einem der vorhergehenden Ansprüche, **dadurch gekennzeichnet, dass** das erste Milchleitungssystem und das zweite Milchleitungssystem eine Erweiterung von den Zitzenbechern (10), die in der entsprechenden Gruppe von Melkplätzen (3a, 3b) verwendet werden, zu einer Milchleitung (31a₂, 31b₂) hin aufweisen, die Milch in einen gemeinsamen Milchtank (32) für die zwei Milchsysteme führt.

8. Karussellmelkstand nach einem der vorhergehenden Ansprüche, **dadurch gekennzeichnet, dass** das erste Milchleitungssystem und/oder das zweite Milchleitungssystem eine gemeinsame Milchleitung (27a, 27b) umfasst, die Milch von einzelnen Milchleitungen (25) von allen Melkplätzen (3a, 3b) in der Gruppe sammelt.

9. Karussellmelkstand nach einem der vorhergehenden Ansprüche, **dadurch gekennzeichnet, dass** das Blockiersystem ein Blockierelement (15a, 47) umfasst, das in einem Durchgang (15), der zu wenigstens einem Melkplatz (3a, 3b) auf der Plattform führt, angeordnet ist, wobei das Blockierelement (15a) beweglich zwischen einer geöffneten Position, in der dieses es einem Tier (1) ermöglicht, den Melkplatz (3a, 3b) zu betreten, und einer geschlossenen Position, in der dieses verhindert, dass ein Tier (1) den Melkplatz (3a, 3b) betritt, angeordnet ist.

10. Karussellmelkstand nach Anspruch 9, **dadurch gekennzeichnet, dass** das Blockierelement (15a) außerhalb der Plattform (2) in einem Durchgang (15), der zu wenigstens einem Melkplatz (3a, 3b) auf der Plattform (2) führt, positioniert ist.

11. Karussellmelkstand nach Anspruch 9, **dadurch gekennzeichnet, dass** das Blockierelement (47) auf der Plattform (2) in einem Durchgang (3a), der zu wenigstens einem Melkplatz (3a, 3b) führt, positioniert ist.

12. Karussellmelkstand nach einem der vorhergehenden Ansprüche 9 bis 11, **dadurch gekennzeichnet, dass** das Blockiersystem eine Steuereinheit umfasst, die die Bewegung des Blockierelements (15a, 47) in die geöffnete Position und die geschlossene Position steuert.

13. Karussellmelkstand nach einem der vorhergehenden Ansprüche, **dadurch gekennzeichnet, dass** der Karussellmelkstand auf freiwilligem Melken basiert.

14. Karussellmelkstand nach einem der vorhergehenden Ansprüche, **dadurch gekennzeichnet, dass** der Karussellmelkstand einen Wartebereich (14) umfasst, in dem die Tiere warten, bevor sie die Plattform (2) betreten.

15. Verfahren für einen Karussellmelkstand, wobei der Karussellmelkstand Folgendes umfasst: eine ringförmige Drehplattform (2), mehrere auf der Plattform (2) angeordnete Melkplätze (3a, 3b), ein erstes Milchleitungssystem, das Milch von einer ersten Gruppe von Melkplätzen (3a) auf der Plattform führt, und ein zweites Milchleitungssystem, das Milch von einer zweiten Gruppe von Melkplätzen (3b) auf der Plattform (2) führt, und wobei das erste Milchleitungssystem und das zweite Milchleitungssystem getrennte Milchleitungssysteme sind, **gekennzeichnet durch** die Schritte des Durchführens eines Waschvorgangs des ersten Milchleitungssystems oder des zweiten Milchleitungssystems, während gleichzeitig Melkvorgänge in den Melkplätzen (3a, 3b) des anderen Milchleitungssystems fortfahren, wodurch verhindert wird, dass Tiere die Gruppe von Melkplätzen (3a, 3b) betreten, in denen das Milchleitungssystem gegenwärtig gewaschen wird, und es Tieren ermöglicht wird, die Gruppe von Melkplätzen (3a, 3b) zu betreten und in dieser gemelkt zu werden, in der das Milchleitungssystem gegenwärtig nicht gewaschen wird.

## Revendications

1. Salle de traite rotative, dans laquelle la salle de traite rotative comprend une plateforme rotative annulaire (2), une pluralité de stalles de traite (3a, 3b) agencées sur la plateforme (2), et un dispositif de lavage et un dispositif de blocage (11, 15a, 47) ;
la salle de traite rotative étant **caractérisée en ce qu'**elle comprend un premier système à lactoduc conduisant le lait provenant d'un premier groupe de stalles de traite (3a) sur la plateforme et un second système à lactoduc conduisant le lait provenant d'un second groupe de stalles de traite (3b) sur la plateforme (2), le premier système à lactoduc et le second système à lactoduc étant des systèmes à lactoduc séparés ; et **en ce que** le dispositif de lavage est agencé pour réaliser un processus de lavage de l'un desdits systèmes à lactoduc à la fois ; et **en ce que** le système de blocage (11, 15a, 47) est agencé pour empêcher les animaux d'entrer dans le groupe de stalles de traite (3a, 3b) dans lesquelles le système à lactoduc est en cours de lavage et permettre aux animaux d'entrer et d'être traits dans le groupe de stalles de traite (3a, 3b) dans lesquelles le système à lactoduc n'est pas en cours de lavage.

2. Salle de traite rotative selon la revendication 1, **caractérisée en ce que** les stalles de traite (3a) du premier groupe sont agencées adjacentes les unes aux autres sur une moitié de la plateforme annulaire (2) et les stalles de traite (3b) des seconds groupes sont agencés adjacents les uns aux autres sur une moitié opposée de la plateforme annulaire (2).

3. Salle de traite rotative selon la revendication 1 ou 2, **caractérisée en ce que** le dispositif de lavage comprend une unité de lavage (36) agencée sur le côté de la plateforme (2), un circuit d'entrée (37, 38a, 38b, 40) fournissant un liquide de lavage provenant de l'unité de lavage (36) aux systèmes à lactoduc, et un organe de vanne (39) grâce auquel il est possible de diriger le liquide de lavage dans le circuit d'entrée vers le premier système à lactoduc ou le second système à lactoduc.

4. Salle de traite rotative selon la revendication 3, **caractérisée en ce que** le circuit d'entrée de liquide comprend une conduite de lavage (37) conduisant un liquide de lavage provenant de l'unité de lavage (36) agencée à une position à l'extérieur de la plateforme vers une position sur la plateforme (2) via un raccord pivotant (20).

5. Salle de traite rotative selon la revendication 3 ou 4, **caractérisée en ce que** le circuit d'entrée pour un liquide de lavage comprend une première conduite de lavage (38a) fournissant un liquide de lavage à des unités de lavage (40) supportant des gobelets trayeurs (10) dans le premier groupe de stalles de traite (3a) pendant un processus de lavage et une seconde conduite de lavage (38b) fournissant un liquide de lavage à des unités de lavage (40) supportant des gobelets trayeurs (10) dans le second groupe de stalles de traite (3b) pendant un processus de lavage.

6. Salle de traite rotative selon l'une quelconque des revendications précédentes, **caractérisée en ce que** le dispositif de lavage comprend un circuit de sortie de liquide (43a, 43b) configuré pour conduire le liquide de lavage provenant du système à lactoduc de retour vers l'unité de lavage (36) de sorte qu'il soit possible de faire circuler le liquide de lavage en boucle fermée pendant le processus de lavage.

7. Salle de traite rotative selon l'une quelconque des revendications précédentes, **caractérisée en ce que** le premier système à lactoduc et le second système à lactoduc ont un prolongement des gobelets trayeurs (10) utilisés dans le groupe respectif de stalles de traite (3a, 3b) jusqu'à un lactoduc (31a₂, 31b₂) conduisant le lait vers une citerne à lait commune (32) pour les deux systèmes à lactoduc.

8. Salle de traite rotative selon l'une quelconque des revendications précédentes, **caractérisée en ce qu'**au moins l'un du premier système à lactoduc et du second système à lactoduc comprend un lactoduc commun (27a, 27b) collectant du lait de lactoducs individuels (25) depuis toutes les stalles de traite (3a, 3b) dans le groupe.

9. Salle de traite rotative selon l'une quelconque des revendications précédentes, **caractérisée en ce que** le système de blocage comprend un organe de blocage (15a, 47) agencé dans un passage (15) menant à au moins une stalle de traite (3a, 3b) sur la plateforme, dans laquelle l'organe de blocage (15a) est agencé mobile entre une position ouverte, dans laquelle il permet à un animal (1) d'entrer dans la stalle de traite (3a, 3b) et une position fermée, dans laquelle il empêche un animal (1) d'entrer dans la stalle de traite (3a, 3b).

10. Salle de traite rotative selon la revendication 9, **caractérisée en ce que** l'organe de blocage (15a) est positionné à l'extérieur de la plateforme (2) dans un passage (15) menant à au moins une stalle de traite (3a, 3b) sur la plateforme (2).

11. Salle de traite rotative selon la revendication 9, **caractérisée en ce que** l'organe de blocage (47) est positionné sur la plateforme (2) dans un passage (3a) menant à au moins une stalle de traite (3a, 3b).

12. Salle de traite rotative selon l'une quelconque des revendications 9 à 11 précédentes, **caractérisée en ce que** le système de blocage comprend une unité de commande commandant le mouvement de l'organe de blocage (15a, 47) vers la position ouverte et la position fermée.

13. Salle de traite rotative selon l'une quelconque des revendications précédentes, **caractérisée en ce que** la salle de traite rotative repose sur une traite volontaire.

14. Salle de traite rotative selon l'une quelconque des revendications précédentes, **caractérisée en ce que** la salle de traite rotative comprend une zone d'attente (14) dans laquelle les animaux attendent avant d'entrer dans la plateforme (2).

15. Procédé pour une salle de traite rotative, dans lequel la salle de traite rotative comprend une plateforme rotative annulaire (2), une pluralité de stalles de traite (3a, 3b) agencées sur la plateforme (2), un premier système à lactoduc conduisant le lait provenant d'un premier groupe de stalles de traite (3a) sur la plateforme et un second système à lactoduc conduisant le lait provenant d'un second groupe de stalles de traite (3b) sur la plateforme (2), et dans lequel le premier système à lactoduc et le second système à lactoduc sont des systèmes à lactoduc séparés, **caractérisé par** les étapes de réalisation d'un processus de lavage du premier système à lactoduc ou du second système à lactoduc en même temps que des processus de traite se produisent dans les stalles de traite (3a, 3b) de l'autre système à lactoduc, empêchant les animaux d'entrer dans le groupe de stalles de traite (3a, 3b) dans lesquelles le système à lactoduc est en cours de lavage et permettant à des animaux d'entrer et d'être traits dans le groupe de stalles de traite (3a, 3b) dans lesquelles le système à lactoduc n'est pas en cours de lavage.
